# EUROPÄISCHE PATENTANMELDUNG

(11) **EP 2 839 999 A1**
(43) Veröffentlichungstag der Anmeldung: **25.02.2015**
(21) Anmeldenummer: 14180883.2
(22) Anmeldetag: 13.08.2014
(51) Int. Cl.: B60S 3/06, C02F 9/00

(54) **Fahrzeugwaschanlage**

(30) Priorität: 21.08.2013 DE 202013103789 U; 22.11.2013 DE 202013105323 U
(71) Anmelder: aquadetox international GmbH, 88317 Altmannshofen (DE)
(72) Erfinder: Lorch, Roland, 88348 Bad Saulgau (DE)
(74) Vertreter: Baumann, Rüdiger Walter

(57) **Zusammenfassung**

Fahrzeugwaschanlage, mit wenigstens einem Aufnahmebehälter (20, 20', 20'', 20"') für Schmutzwasser und/oder aus Schmutzwasser aufbereitetem Brauchwasser (30) von oder für mehrere/n Waschvorgänge/n, wobei der wenigstens eine Aufnahmebehälter (20, 20', 20'', 20"') in oder an einer Tragstruktur (11; 11') von Funktionskomponenten (14, 15) der Fahrzeugwaschanlage (10; 10') angeordnet oder darin und/oder daran ausgebildet ist und in dem Aufnahmebehälter wenigstens eine Klärstufe (21) zum Klären des anfallenden mineralölhaltigen Schmutzwassers (30) vorgesehen ist.

## Beschreibung

Die Erfindung betrifft eine Fahrzeugwaschanlage, mit wenigstens einem Behälter zum Aufnehmen von Schmutzwasser und/oder Brauchwasser von oder für mehrere/n Waschvorgänge/n.

Es ist bekannt, zum Beispiel bei Schmutzwassererzeugern wie Autowaschstraßen, Autowaschplätzen und dergleichen, das anfallende Schmutzwasser in einer Klärstufe zu klären und als Brauchwasser wieder einzusetzen. Um den Verbrauch an kostbarem Trinkwasser zu reduzieren, wird ein möglichst geringer Frischwasserverbrauch der Autowaschanlagen angestrebt.

Üblicherweise wird das eingesetzte Trinkwasser dafür wieder aufbereitet, was allerdings großvolumige Behälter zum Aufnehmen des Schmutzwassers erfordert. Deren Unterbringung verlangt zudem zusätzliche Räumlichkeiten, welche darüber hinaus eine nicht wenig komplexe Verrohrung mit dem eigentlichen Waschraum samt der dazu notwendigen Armaturen voraussetzt.

Es ist Aufgabe der vorliegenden Erfindung, eine verbesserte Fahrzeugwaschanlage zur Verfügung zu stellen, die insbesondere eine Abwasseraufbereitung ohne zusätzlichen Raumbedarf zulässt.

Diese Aufgabe wird durch eine Fahrzeugwaschanlage gelöst, mit wenigstens einem Aufnahmebehälter für Schmutzwasser und/oder aus Schmutzwasser aufbereitetes Brauchwasser von oder für mehrere/n Waschvorgänge/n, wobei der wenigstens eine Aufnahmebehälter in oder an einer Tragstruktur von Funktionskomponenten der Fahrzeugwaschanlage angeordnet oder darin und/oder daran ausgebildet ist und in dem Aufnahmebehälter wenigstens eine Klärstufe zum Klären des anfallenden mineralölhaltigen Schmutzwassers vorgesehen ist.

Ein wesentlicher Punkt dieser Fahrzeugwaschanlage besteht dabei darin, dass ein üblicherweise ungenutzter Raum in oder an der Tragstruktur der Funktionskomponenten (wie zum Beispiel Bürsten, Wasser- und Luftdüsen) nunmehr genutzt wird, um den wenigstens einen Aufnahmebehälter für Schmutzwasser und/oder Brauchwasser unterzubringen. Damit entfällt insbesondere die Notwendigkeit, weitere Räumlichkeiten für derart großvolumige Behälter vorzusehen. Durch deren gleichzeitige Nähe zum Ort des Schmutzwasseranfalls bzw. zum Ort der Brauchwasseranforderung entfällt gleichzeitig die Notwendigkeit, eine raumübergreifende Verrohrung samt der dazu erforderlichen Armaturen bereit zu stellen. Insofern stellt die erfindungsgemäße Fahrzeugwaschanlage gar keine, wenigstens aber deutlich reduzierte Raumanforderungen bei gleichzeitig einfachster konstruktiver Auslegung, ohne dabei den Abwasserbehandlungseffekt in irgendeiner Weise einzuschränken. In der Folge ist eine solche Fahrzeugwaschanlage sehr kostengünstig zu etablieren und zudem wartungsarm, was deren unterbrechungsfreien und zuverlässigen Betrieb sicherstellt.

Bevorzugte Ausführungsformen der vorstehenden Fahrzeugwaschanlage sind in den Unteransprüchen bzw. der Kombination von Unteransprüchen bzw. von Unteransprüchen mit dem Hauptanspruch angegeben. Auch können einzelne Merkmale aus den Unteransprüchen weitere Ausführungsformen darstellen, wenn diese mit den Unteransprüchen bzw. dem Hauptanspruch kombiniert werden.

In einer Ausführungsform der Fahrzeugwaschanlage ist vorgesehen, dass der wenigstens eine Aufnahmebehälter in einer Stütze und/oder einem Querträger der Fahrzeugwaschanlage angeordnet oder darin ausgebildet ist. Damit sind sowohl Portal- als auch Ständerwaschanlagen mit einem entsprechenden Behälter auszurüsten oder auch nachzurüsten, was deren Akzeptanz deutlich steigert. Insbesondere ist es dabei auch unerheblich, ob es sich um eine feststehende oder längs und/oder quer zum Fahrzeug bewegbare Fahrzeugwaschanlage handelt, da der wenigstens eine Behälter an der Stütze und/oder dem Querträger mitbewegbar ist und somit eine stetige Nähe zum Ort der Brauchwasseranforderung bzw. des Schmutzwasseranfalls besteht. Damit wird insbesondere auch eine komplexe Verrohrung samt damit einhergehender Dichtigkeitsprobleme vermieden.

In einer weiteren Ausführungsform der Fahrzeugwaschanlage ist vorgesehen, dass der wenigstens eine Aufnahmebehälter in einer im Wesentlichen hohlen Tragstruktur aufgenommen ist. Dabei wird die beste Raumausnutzung erzielt, die zudem eine stabile Abstützung des Behälters gewährleistet, insbesondere dann, wenn dieser in die Tragstruktur einstellbar oder darin eingebaut, z.B. damit verklebt oder verschraubt, oder durch die Tragstruktur selbst ausgebildet ist.

In einer weiteren Ausführungsform der Fahrzeugwaschanlage ist es weiterhin vorgesehen, dass der Aufnahmebehälter aus einem Kunststoff oder Faserverbundmaterial besteht, womit dieser besonders leicht herstellbar und insbesondere auch besonders leicht an unterschiedlichste Aufnahmeorte anpassbar ist. Entsprechend geringe Dichtigkeitsprobleme können sich ergeben, was eine weitgehende Wartungsfreiheit einer solchen Fahrzeugwaschanlage garantiert.

Die vorstehend genannte Aufgabe wird zudem durch eine Fahrzeugwaschanlage gelöst, mit einem Waschraum für Fahrzeuge, in dem Funktionskomponenten der Fahrzeugwaschanlage angeordnet sind, und mit wenigstens einem Aufnahmebehälter für Schmutzwasser und/oder Brauchwasser von oder für mehrere/n Waschvorgänge/n, wobei der wenigstens eine Aufnahmebehälter in dem Waschraum angeordnet oder ausgebildet ist und in dem Aufnahmebehälter wenigstens eine Klärstufe zum Klären des anfallenden mineralölhaltigen Schmutzwassers vorgesehen ist.

Ein wesentlicher Punkt dieser Fahrzeugwaschanlage besteht dabei darin, dass ebenfalls ein üblicherweise ungenutzter Raum im Waschraum der Anlage selbst genutzt wird. Auch dadurch werden zusätzliche Räumlichkeiten für entsprechend großvolumige Behälter überflüssig, ohne dass dies die Abwasseraufbereitung in irgendeiner Weise einschränkt. Auch bei einer solchen Anordnung des wenigstens einen Aufnahmebehälters entfällt eine raumübergreifende Verrohrung samt zugehörigen Armaturen, womit eine konstruktiv besonders einfache und gleichzeitig raumeffiziente Unterbringung des oder der Aufnahmebehälter gegeben ist.

In einer Ausführungsform der genannten Fahrzeugwaschanlage ist es danach vorgesehen, dass der wenigstens eine Behälter in einem Eckbereich des Waschraumes der Fahrzeugwaschanlage angeordnet ist. Derartige Eckbereiche werden üblicherweise nicht genutzt und bieten einen entsprechenden Raum zur Unterbringung großvolumiger Behälter, so dass deren Platzierung an diesen Stellen problemlos möglich ist. Für den eigentlichen Waschvorgang sind diese dabei nicht störend und gleichzeitig nahe am Ort des Schmutzwasseranfalls und der Brauchwasseranforderung aufgestellt. Darüber hinaus ist eine einfache Nachrüstung von Fahrzeugwaschanlagen möglich, da deren üblicherweise leere Eckbereiche problemlos zugänglich sind.

In einer weiteren Ausführungsform der Fahrzeugwaschanlage ist es zudem vorgesehen, dass der wenigstens eine Behälter im Zufahrts- und/oder Ausfahrtsbereich des Waschraumes angeordnet ist. Gerade hier befinden sich entsprechende freie Räume, da der erste Waschvorgang üblicherweise erst ein ganzes Stück hinter der Zufahrt bzw. der Ausfahrt der Fahrzeugwaschanlage stattfindet. Gerade in solchen Raumbereichen ist deshalb der wenigstens eine Behälter nicht störend und nicht Platz beanspruchend, dabei aber wiederum nahe am Ort des Schmutzwasseranfalls und der Brauchwasseranforderung.

Es ist erfindungsgemäß vorgesehen, dass der wenigstens eine Aufnahmebehälter wenigstens eine Klärstufe zum Klären des anfallenden mineralölhaltigen Schmutzwassers umfasst. Darüber hinaus sieht eine Weiterbildung vor, dass wenigstens eine, insbesondere der Klärstufe nachgelagerte Inertreinigungsstufe zum Reinigen des Schmutzwassers von inerten Störstoffen und/oder eine Brauchwasserbevorratung oder Teile der Klärstufe, Inertreinigungsstufe oder Brauchwasserbevorratung umfasst ist. Damit steht bei keinerlei zusätzlicher Raumanforderung dennoch eine umfangreiche Brauchwasseraufbereitung zur Verfügung, bei welcher schwebende und/oder biologisch abbaubare Schmutzwasserbestandteile aus dem Schmutzwasser heraus geklärt werden können. Die Inertreinigungsstufe ist dabei bevorzugt auf physikalische Effekte aufgebaut, um eine entsprechende Trennung der Störstoffe von dem bereits geklärten, aber noch nicht als Brauchwasser verwendbaren Schmutzwasser zu erreichen.

Die Klärstufe ist dabei in einer Variante auch in der Lage, neben den Mineralölbestandteilen auch synthetische Schmierstoffrückstände zu klären. Die Kläranlage kann zudem an jedwede Kläraufgabe angepasst werden und zur Klärung von mit Chemikalien bzw. Reinigungs- oder Lösungsmitteln belastetem Abwasser verwendet werden.

In einer Ausführungsform der Fahrzeugwaschanlagen ist es darüber hinaus vorgesehen, dass die wenigstens eine Klärstufe ein- oder mehrstufig ausgebildet ist und/oder die wenigstens eine Klärstufe einen Schlammfang, eine Belebungseinheit und/oder eine Nachkläreinheit umfasst. Damit ist ein noch weiterer Funktionsumfang ohne zusätzliche Raumerfordernisse möglich, bei dem ein Zusetzen der Anlage bei gleichzeitig verbesserter Reinigungsleistung sicher vermieden wird. Für die Reinigung des ölhaltigen Schmutzwassers können auch biologische Effekte genutzt werden.

Insbesondere ist vorgesehen, dass die vorgenannten Einheiten, also Schlammfang, Belebungseinheit und oder die Nachkläreinheit, je in einen Behälter angeordnet sind. Das heißt, die Klärstufe besteht aus mehreren Einzelelementen die ihrerseits in den Behältern vorgesehen sind wobei die Behälter am beliebigen Orten an der Fahrzeugwaschanlage angeordnet sind und durch entsprechende Rohrleitungssysteme miteinander in Verbindung stehen. Die Einzelbehälter können jedoch auch als getrennte Einheiten in einem Behälter zusammengefasst werden.

In einer weiteren bevorzugten Ausführungsform der Fahrzeugwaschanlagen ist vorgesehen, dass mindestens zwei Inertreinigungsstufen wahlweise parallel oder seriell miteinander in Verbindung stehen. Auch dadurch wird der Funktionsumfang der Fahrzeugwaschanlage trotz Platz sparender Unterbringung deutlich erhöht. Denn eine solche wahlweise parallele oder serielle Schaltung von mindestens zwei Inertreinigungsstufen erhöht einerseits die Kapazität der Fahrzeugwaschanlage oder stellt andererseits eine verbesserte Reinigungsleistung bereit.

In einer weiteren Ausführungsform der Fahrzeugwaschanlagen ist vorgesehen, dass Verbindungs- und/oder Schalt- und/oder Steuerinstallationen für die wenigstens eine Klärstufe und/oder die wenigstens eine Inertreinigungsstufe innerhalb der im Wesentlichen hohlen Tragstruktur für Funktionskomponenten der Fahrzeugwaschanlage angeordnet sind. Damit ist insbesondere sichergestellt, dass derartige Installationen ebenfalls keinen weiteren Raumbedarf erfordern und folglich genauso Platz sparend wie der wenigstens eine Behälter untergebracht werden können. Gleichzeitig entsteht eine besonders kompakte, wartungsarme und zudem sicher und zuverlässig arbeitende Fahrzeugwaschanlage. In einer weiteren Ausführungsform der Fahrzeugwaschanlagen ist es außerdem vorgesehen, dass deren Funktionskomponenten wenigstens eine Bürste und/oder wenigstens eine Luftdüse und/oder wenigstens eine Wasserdüse umfassen, wobei die wenigstens eine Wasserdüse insbesondere mit dem wenigstens einen Behälter in Verbindung steht. Dadurch entsteht eine besonders hohe Systemintegration des Abwasserbehandlungsprozesses, mit gleichzeitig hoher Reinigungsleistung bei geringstem Raumbedarf.

In einer Ausführungsform der Fahrzeugwaschanlagen ist es darüber hinaus vorgesehen, dass das in der wenigstens einen Klärstufe geklärte und/oder in der wenigstens einen Inertreinigungsstufe gereinigte Schmutzwasser einer Brauchwasservorlage zuführbar ist. Mit einer derartigen Kopplung der platzsparend untergebrachten Klär- und/oder Inertreinigungsstufe an das Brauchwasser muss das aufbereitete Schmutzwasser nicht abgeleitet und damit entsorgt werden, sondern kann zur Wiederverwendung im Waschprozess eingesetzt werden. Dadurch steigt insbesondere die Effizienz der Trinkwassernutzung, die dessen insgesamt verbrauchte Menge deutlich reduziert.

In einer weiteren Ausführungsform der Fahrzeugwaschanlagen ist es darüber hinaus vorgesehen, dass diese als Portalwaschanlage oder als Durchlaufwaschanlage ausgestaltet ist. Damit lassen sich beide gängigen Fahrzeugwaschanlagentypen erfindungsgemäß aus- oder nachrüsten, womit eine hohe Flexibilität und damit Akzeptanz des Raumsparkonzeptes gegeben ist.

In einer noch weiteren bevorzugten Ausführungsform der Fahrzeugwaschanlagen ist es zudem vorgesehen, dass die wenigstens eine Klärstufe beziehungsweise eine Einheit der Klärstufe (als Einheit der Klärstufe wird zum Beispiel der Schlammfang, die Belebungseinheit oder die Nachkläreinheit angesehen) und/oder die wenigstens eine Inertreinigungsstufe als in einem im Boden, insbesondere bereits bauseits vorhandenen, vorgesehenen Raum oder in einem im Boden eingelassenen Behälter angeordnet ist/sind und die Brauchwasservorlage als nachrüstbarer, in wenigstens einer Stütze und/oder in einem Eckbereich angeordneter Behälter ausgebildet ist. Damit sich die erfindungsgemäßen Fahrzeugwaschanlagen auch nachträglich installierbar, in dem konventionelle, bereits bestehende Fahrzeugwaschanlagen, die über wenigstens eine im Bodenbereich versenkte Klärstufe bzw. deren Elemente/Einheiten und/oder Inertreinigungsstufe verfügen, mit den entsprechend raumsparend angeordneten Behältern für eine nachgelagerte Brauchwasservorlage nachgerüstet werden. Die entsprechenden Behälter samt Funktionskomponenten können dabei als Nachrüstsatz angeboten und vertrieben werden, sodass eine einfache und zielgerichtete sowie kostengünstige Verbesserung bestehender Fahrzeugwaschanlagen im Sinne der vorstehenden Aufgabenstellung erzielbar ist. Durch die geschickte Unterbringung der zusätzlich erforderlichen Behälter entsteht dabei keinerlei Nachteil, insbesondere keinerlei zusätzliches Platzerfordernis, das den üblichen Betrieb der bereits bestehenden Fahrzeugwaschanlage einschränken könnte.

Aufgrund des besonders hohen Raumspareffektes soll insbesondere eine im Wesentlichen hohle Tragstruktur für Funktionskomponenten einer Fahrzeugwaschanlage zum Aufnehmen wenigstens eines Behälters für Schmutzwasser und/oder Brauchwasser von oder für mehrere Waschvorgänge verwendet werden. Alternativ oder zusätzlich kann erfindungsgemäß aber auch ein Waschraum einer Fahrzeugwaschanlage zum Aufnehmen wenigstens eines Behälters für Schmutzwasser oder Brauchwasser von oder für mehrere/n Waschvorgänge/n genutzt werden.

Im Zusammenhang mit der Erfindung werden die Begriffe Behälter und Aufnahmebehälter synonym verwendet.

In den beiliegenden Zeichnungen ist die Erfindung insbesondere in drei Ausführungsbeispielen schematisch dargestellt. Es zeigen:
- Fig. 1: eine schematische Vorderansicht einer ersten Ausführungsform einer erfindungsgemäßen Fahrzeugwaschanlage, die hier als Portalwaschanlage ausgeführt ist;
- Fig. 2: eine schematische Vorderansicht einer zweiten Ausführungsform einer erfindungsgemäßen Fahrzeugwaschanlage, die hier als Ständerwaschanlage ausgeführt ist;
- Fig. 3: eine Draufsicht auf eine dritte Ausführungsform einer erfindungsgemäßen Waschanlage, mit einer Ständerwaschanlage, die in einem Waschraum untergebracht ist, und
- Fig. 4: eine schematische Vorderansicht einer vierten Ausführungsform einer erfindungsgemäßen Fahrzeugwaschanlage, die als Portalwaschanlage ausgeführt ist.

In den Figuren sind gleiche oder einander entsprechende Elemente jeweils mit den gleichen Bezugszeichen bezeichnet und werden daher, sofern nicht zweckmäßig, nicht erneut beschrieben.

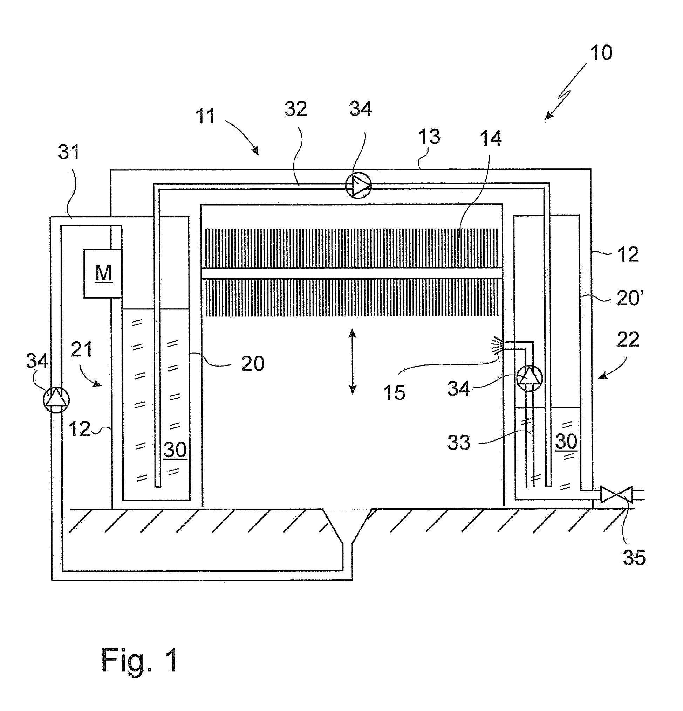

Fig. 1 zeigt eine schematische Vorderansicht einer ersten Ausführungsform einer erfindungsgemäßen Fahrzeugwaschanlage 10, die hier nur beispielhaft als Portalwaschanlage ausgeführt ist. Die Fahrzeugwaschanlage 10 weist dabei eine Tragstruktur 11 mit beidseitigen Stützen 12 und einem Querträger bzw. einer Traverse 13 auf. Zwischen beiden Stützen 12 ist eine Funktionskomponente 14 der Fahrzeugwaschanlage 10, welche hier eine Bürste sein soll, gehalten, die vertikal auf und ab bewegt werden kann und die von einem Motor M in Drehung versetzbar ist. Die Fahrzeugwaschanlage 10 ist dabei senkrecht zur Zeichnungsebene verfahrbar, so dass ein damit zu reinigendes Fahrzeug selbst nicht bewegt werden muss. Die Stützen 12 der Fahrzeugwaschanlage 10 weisen eine hohle Struktur auf, in welcher ein jeweiliger Aufnahmebehälter 20, 20' untergebracht ist, der links eine Klärstufe 21 und rechts eine Inertreinigungsstufe 22 umfasst. In diesen beiden Aufnahmebehältern 20, 20' wird das anfallende Schmutzwasser 30 aufgefangen, das aus dem Reinigungsprozess mittels einer Pumpe 34 über eine Verrohrung 31 zunächst der bspw. biologischen Klärstufe 21 zugeführt wird. Nach der Klärung des Schmutzwassers 30 wird dieses mittels einer weiteren Pumpe 34 über eine Verrohrung 32 der Inertreinigungsstufe 22 zugeführt, wo eine Trennung von Störstoffen aus dem bereits geklärten, aber noch nicht als Brauchwasser verwendbaren Schmutzwassers 30 vorgenommen wird. Die links- und rechtsseitig in den jeweiligen Stützen 12 aufgenommenen Aufnahmebehälter 20, 20' stehen damit über den Querträger 13 und die darin verlaufende Verrohrung 32 fluidisch in Verbindung, womit wesentliche Komponenten des zur Schmutzwasseraufbereitung notwendigen Systems vollständig in der Tragstruktur 11 der Fahrzeugwaschanlage 10 aufgenommen sind und keinerlei weiteren Raumbedarf erfordern. Dabei kann insbesondere die Verrohrung 32 mit der darin platzierten Pumpe 34 als starres Bauteil ausgeführt werden, da diese keine Anbindung an bewegliche Strukturen erfordern, sondern mit der Tragstruktur 11 der Fahrzeugwaschanlage 10 mitbewegt werden. Eine Anbindung der Verrohrung 31 kann dabei einfach als mitlaufender Schlauch ausgeführt sein, der bei Bewegung der Tragstruktur 11 ab- bzw. aufgewickelt wird. Die in der Verrohrung 31 platzierte Pumpe 34 kann dabei raumfest installiert werden, z.B. am Boden oder an einer angrenzenden Wand der Fahrzeugwaschanlage 10. Das geklärte und inertgereinigte Schmutzwasser 30 kann auch aus dem rechtsseitigen Behälter 20, 20' mittels Verrohrung 33 über eine Pumpe 34 einer weiteren Funktionskomponente 15 der Fahrzeugwaschanlage 10, welche hier eine Wasserdüse 15 sein soll, zugeführt werden.

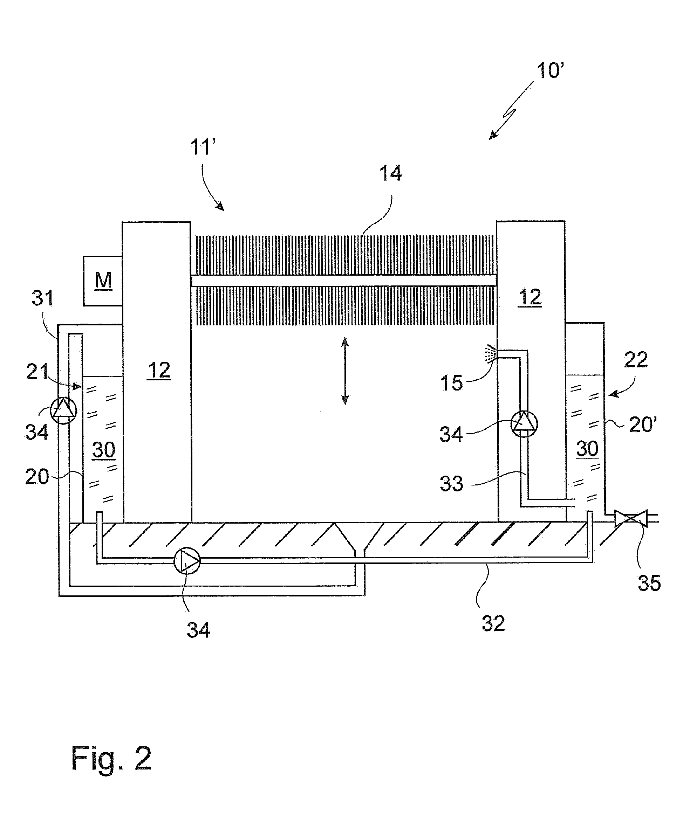

Eine solche Düse 15 kann dabei auch zusätzlich oder alternativ an der gegenüber liegenden Stütze 12 angebracht und über eine entsprechende Verrohrung in dem Querträger 13 mit der Inertreinigungsstufe 22 verbunden werden. Alternativ oder zusätzlich kann auch das schließlich geklärte und inertgereinigte Schmutzwasser 30 aus dem Behälter 20, 20' der Inertreinigungsstufe 22 über ein Ventil 35 abgelassen und entsorgt oder einer Brauchwasserbevorratung zugeführt werden. Insgesamt entsteht dadurch eine Fahrzeugwaschanlage 10, deren Funktionalität um eine vollständige Schmutzwasseraufbereitung ergänzt ist und die keinerlei weiteren Raumbedarf für diese erfordert. Dabei sind die Verbindungs-/Schalt- und Steuerinstallationen fast vollständig in der Tragstruktur 11 integriert. Fig. 2 zeigt eine schematische Vorderansicht einer zweiten Ausführungsform einer erfindungsgemäßen Fahrzeugwaschanlage 10', die hier nur beispielhaft als Ständerwaschanlage ausgeführt ist. Deren Tragstruktur 11 sieht dabei links- und rechtsseitige Stützen 12 vor, zwischen denen eine Funktionskomponente 14 der Fahrzeugwaschanlage 10', hier wiederum eine Bürste, vertikal beweglich angeordnet ist, die von einem Motor M in Drehung versetzt werden kann. Die hier gezeigte Fahrzeugwaschanlage 10' soll dabei raumfest aufgestellt sein, so dass sich ein zu reinigendes Fahrzeug senkrecht zur Zeichnungsebene darunter hindurch bewegen muss. In einer Abwandlung der ersten Ausführungsform einer erfindungsgemäßen Fahrzeugwaschanlage 10 sollen dabei links- und rechtsseitige Aufnahmebehälter 20, 20' nicht in den Stützen 12 selbst integriert, sondern daran angebracht sein.

Der linksseitige Aufnahmebehälter 20 stellt dabei wiederum eine Klärstufe 21 und der rechtsseitige Aufnahmebehälter 20' eine Inertreinigungsstufe 22 bereit. Aufgrund eines hier die Stützen 12 nicht übergreifenden Querträgers sind beide Aufnahmebehälter 20 über eine im Boden geführte Verrohrung 32 und eine darin platzierte Pumpe 34 miteinander verbunden, so dass geklärtes Schmutzwasser 30 aus der Klärstufe 21 in die Inertreinigungsstufe 22 überführt werden kann. Die Klärstufe 21 wird dabei mittels einer Pumpe 34 mit dem anfallenden Schmutzwasser 30 über eine Verrohrung 31 versorgt. Auch bei diesem Ausführungsbeispiel kann das inertgereinigte Schmutzwasser 30 alternativ oder zusätzlich über ein Ventil 35 entsorgt oder einer Brauchwasservorlage zugeführt werden. Auch wird das inertgereinigte Schmutzwasser 30 gleich wie im ersten Ausführungsbeispiel aus der Inertreinigungsstufe 22 über eine entsprechende Verrohrung 33 und eine Pumpe 34 einer weiteren Funktionskomponente 15 der Fahrzeugwaschanlage 10', hier wiederum eine Wasserdüse, zugeführt. Wie im ersten Ausführungsbeispiel können diese Verrohrung 33 und diese Pumpe 34 in der rechtsseitigen Stütze 12 aufgenommen werden, soweit dafür Raum vorhanden ist. Sollte dies nicht der Fall sein, so können auch beide Komponenten an der Außenseite der Stütze 12 angeordnet sein. Ähnlich wie im ersten Ausführungsbeispiel bereits erläutert, lässt sich natürlich auch eine entsprechende Wasserdüse 15 an der gegenüber liegenden Stütze 12 der Fahrzeugwaschanlage 10' anbringen, wenn z.B. eine zugehörige Verrohrung unter- oder oberhalb der Stützen 12 vorgesehen wird.

Damit ist auch bei der feststehenden Fahrzeugwaschanlage 10' eine äußerst effiziente Raumnutzung möglich, ohne für die großvolumigen Aufnahmebehälter 20, 20' zusätzliche Räume oder zusätzliche Fläche bereit zu stellen, welche über den Raumbedarf des eigentlichen Waschvorgangs hinausgehen würde.

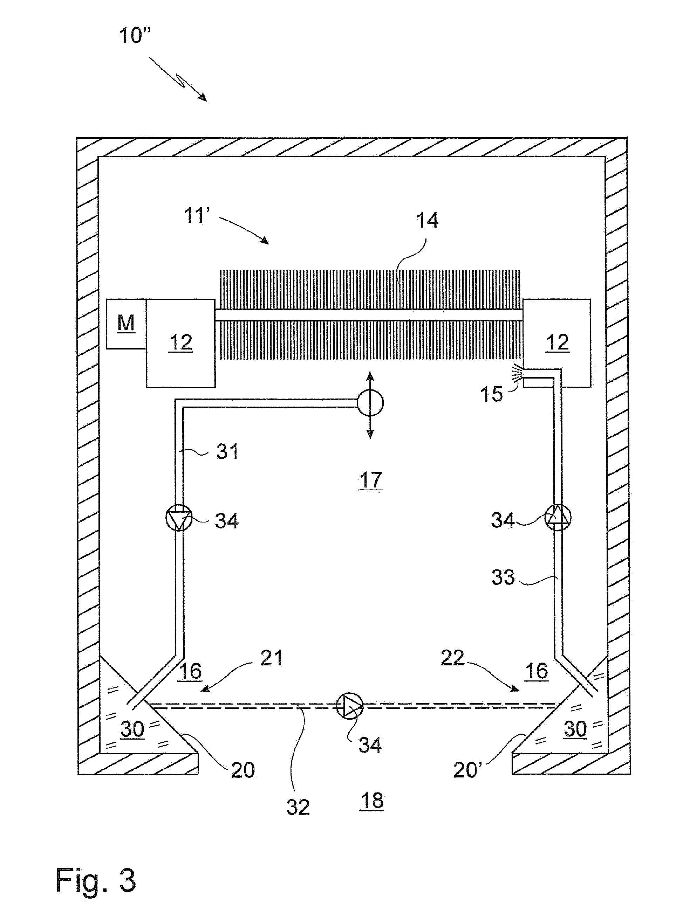

Fig. 3 zeigt eine schematische Draufsicht auf eine dritte Ausführungsform einer erfindungsgemäßen Fahrzeugwaschanlage 10'' mit einer Ständerwaschanlage, die in einem Waschraum 17 untergebracht ist. Diese kann in Richtung des gezeigten Doppelpfeils hin und her fahren, so dass ein darin zu reinigendes Fahrzeug nicht bewegt werden muss. Die Fahrzeugwaschanlage 10" weist eine im Prinzip gleiche Tragstruktur 11' wie die der zweiten Ausführungsform auf, welche zwei Stützen 12 umfasst, zwischen denen sich als eine Funktionskomponente 14 der Fahrzeugwaschanlage 10' eine Bürste erstreckt, die senkrecht zur Zeichnungsebene auf und ab bewegbar und von einem Motor M in Drehung versetzbar ist. Die Tragstruktur 11' ist in einem bis auf einen Zufahrts- und Ausfahrtsbereich 18 geschlossenen Waschraum 17 aufgenommen. In Eckbereichen 16 dieses Waschraums 17 sind dabei links- und rechtsseitige Aufnahmebehälter 20, 20' für Schmutzwasser 30 angeordnet, deren linker Aufnahmebehälter 20 eine Klärstufe 21 und deren rechter Aufnamebehälter 20' eine Inertreinigungsstufe 22 bereitstellt. Ähnlich dem zweiten Ausführungsbeispiel sind beide Aufnahmebehälter 20, 20' über eine Verrohrung 32 miteinander verbunden, in der eine Pumpe 34 zur Förderung des geklärten Schmutzwassers 30 von der Klärstufe 21 zur Inertreinigungsstufe 22 platziert ist.

Wie bereits in der zweiten Ausführungsform beschrieben, wird das im Reinigungsprozess anfallende Schmutzwasser 30 über eine Verrohrung 31 und eine Pumpe 34 dem Aufnahmebehälter 20 der Klärstufe 21 zugeführt. Aus dem Aufnahmebehälter 20' der Inertreinigungsstufe 22 kann das inertgereinigte Schmutzwasser 30 schließlich über eine Verrohrung 33 und eine Pumpe 34 einer weiteren Funktionskomponente 15 der Fahrzeugwaschanlage 10", hier wiederum eine Wasserdüse, zugeführt werden, die - wie bereits bei der ersten und zweiten Ausführungsform beschrieben - auch über eine entsprechende Verrohrung an der gegenüber liegenden Stütze 12 angeordnet sein kann. Der solchermaßen geschlossene Kreislauf der Schmutzwasseraufbereitung und Verwendung des schließlich aufbereiteten Schmutzwassers 30 gleicht damit den Verfahren der ersten und zweiten Ausführungsform der vorliegenden Erfindung und unterscheidet sich lediglich darin, dass hier die üblicher Weise nicht genutzten Eckbereiche 16 eines Waschraums 17 zur Unterbringung der großvolumigen Aufnahmebehälter 20, 20' genutzt werden. Selbstverständlich ist dabei auch eine Kombination mit z.B. der zweiten und/oder dritten Ausführungsform möglich, wenn dies anforderungsgemäß gewünscht ist oder sich aus den räumlichen Gegebenheiten ergibt.

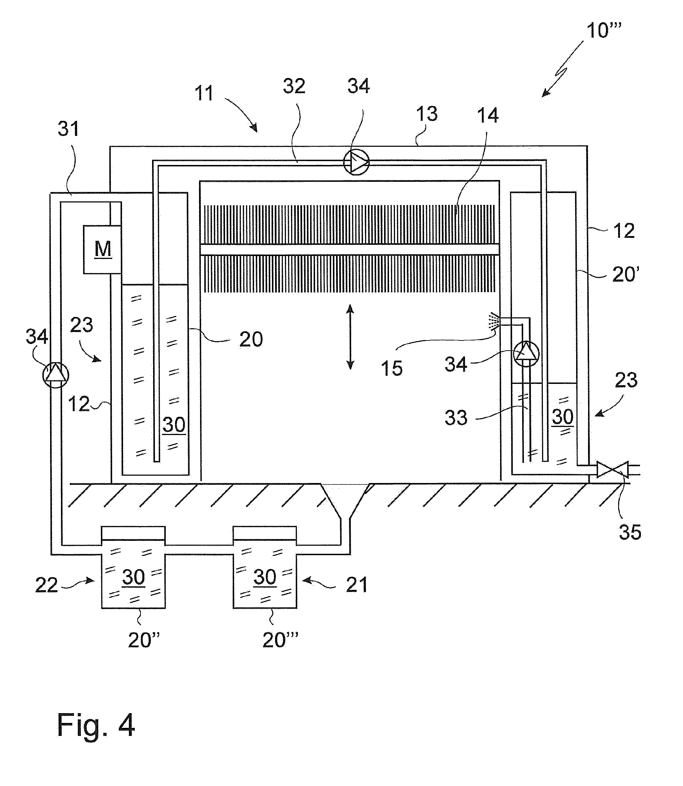

Fig. 4 zeigt eine schematische Vorderansicht einer vierten Ausführungsform einer erfindungsgemäßen Fahrzeugwaschanlage 10"', die als Portalwaschanlage ausgeführt ist. Auch wenn diese Variante hier nur im Zusammenhang mit einer Portalwaschanlage gezeigt ist, beschränkt sich diese Variante nicht auf die Portalwaschanlage, sie ist natürlich in gleicher Weise auch bei einer Durchlaufwaschanlage beziehungsweise Waschstraße realisierbar. Bei einer Waschstraße wird das Fahrzeug durch die Waschelemente geschleppt, bei Portalwaschanlage steht das Auto und das Portal mit den Reinigungselementen überfährt das Fahrzeug. Im Prinzip handelt es sich dabei um die Portalwaschanlage 10 der Fig. 1, die allerdings noch zusätzlich eine im Boden versenkte Klärstufe 21 und eine Inertreinigungsstufe 22 aufweist, deren jeweilige Aufnahmebehälter 20" und 20"' mit Schmutzwasser 30 befüllt sind. Diese bereits bestehende Installation wurde erfindungsgemäß um eine Brauchwasservorlage 23 nachgerüstet, deren Aufnahmebehälter 20 und 20' in der jeweiligen links- beziehungsweise rechtsseitigen Stütze 12 der Fahrzeugwaschanlage 10"' untergebracht wurden. In den Aufnahmebehältern 20, 20' der Brauchwasservorlage wird dabei Brauchwasser 30 gesammelt und dem Reinigungsprozess gleich wie in Fig. 1 gezeigt und beschrieben zur Verfügung gestellt. Der einzige Unterschied zwischen den jeweiligen Ausführungsformen der Fig. 4 und 1 besteht dabei darin, dass die bereits bestehenden Aufnahmebehälter 20", 20'" der im Boden versenkten Klärstufe 21 und Inertreinigungsstufe 22 in die erfindungsgemäße Installation integriert wurden, sodass auch konventionelle Fahrzeugwaschanlagen besonders einfach, platzsparend und kostengünstig nachrüstbar sind, ohne dass irgendwelche räumlichen Einschränkungen zu erwarten wären. Gleichzeitig wird der Abwasserbehandlungsprozess durch das nachgerüstete Volumen der Aufnahmebehälter 20, 20' kapazitiv aufgerüstet, sodass eine deutlich verbesserte Reinigungsfähigkeit der Fahrzeugwaschanlage 10"' durch eine höhere Verweildauer und damit Reinigungsdauer des Schmutzwassers 30 in den bereits bestehenden Aufnahmebehältern 20", 20'" der Klär- und Inertreinigungsstufe erzielbar ist. Die zusätzlich benötigten Aufnahmebehälter 20, 20' samt aller Funktionskomponenten, wie Pumpen 34 und Verrohrungen 31, 32, 33, Düsen 15 und Ventilen 35, können dabei als Nachrüstsatz angeboten und vertrieben werden, der leicht montierbar in bestehende Fahrzeugwaschanlagen diesen Typs integriert werden kann. Wie auch dem Vergleich der Fahrzeugwaschanlagen 10 und 10"' der Fig. 1 beziehungsweise 4 hervorgeht, sind dabei auch keinerlei zusätzliche Funktionskomponenten erforderlich, um die nachrüstbare Fahrzeugwaschanlage 10"' zu erhalten.

In der Summe steht damit jeweils eine Fahrzeugwaschanlage 10, ... 10"' zur Verfügung, deren Reinigungsleistung in keiner Weise eingeschränkt ist, die dabei aber gar keinen oder einen lediglich sehr überschaubarer Raumbedarf für die Behälter für Schmutz- und/oder Brauchwasser 30 erfordert. Insbesondere sind dabei keinerlei weitere Räumlichkeiten notwendig, wie sie heute üblicherweise zur Unterbringung derartiger Aufnahmebehälter 20 vorgesehen werden müssen. Der konstruktiv einfache Aufbau dieser Fahrzeugwaschanlagen 10, ... 10"' lässt dabei zudem eine sehr hohe Zuverlässigkeit und Wartungsfreiheit erwarten.

Die Klärstufe kann in sämtlichen Ausführungsvarianten als biologische Klärstufe ausgebildet sein, die eine Entfernung der Ölbestandteile mit Hilfe von Mikroorganismen durchführt. Die Klärung erfolgt bspw. im Biofilmverfahren mit auf Aufwuchskörpern immobilisierten Mikroorganismen. Die Abwasserbehandlung kann auch in einem in dem Aufnahmebehälter 20, 20", 20"' vorgesehenen fluidisierten Festbett erfolgen.

Die jetzt mit der Anmeldung und später eingereichten Ansprüche sind ohne Präjudiz für die Erzielung weitergehenden Schutzes.

Sollte sich hier bei näherer Prüfung, insbesondere auch des einschlägigen Standes der Technik, ergeben, dass das eine oderandere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist. Auch eine solche Unterkombination ist von der Offenbarung dieser Anmeldung abgedeckt.

Es ist weiter zu beachten, dass die in den verschiedenen Ausführungsformen beschriebenen und in den Figuren gezeigten Ausgestaltungen und Varianten der Erfindung beliebig untereinander kombinierbar sind. Dabei sind einzelne oder mehrere Merkmale beliebig gegeneinander austauschbar. Diese Merkmalskombinationen sind ebenso mit offenbart.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die nur in der Beschreibung offenbart wurden oder auch Einzelmerkmale aus Ansprüchen, die eine Mehrzahl von Merk-malen umfassen, können jederzeit als von erfindungswesentlicher Bedeutung zur Abgrenzung vom Stande der Technik in den oder die unabhängigen Anspruch/Ansprüche übernommen werden, und zwar auch dann, wenn solche Merkmale im Zusammenhang mit anderen Merkmalen erwähnt wurden beziehungsweise im Zusammenhang mitanderen Merkmalen besonders günstige Ergebnisse erreichen.

## Patentansprüche

1. Fahrzeugwaschanlage, mit wenigstens einem Aufnahmebehälter (20 ... 20'") für Schmutzwasser und/oder aus Schmutzwasser aufbereitetem Brauchwasser (30) von oder für mehrere/n Waschvorgänge/n, wobei der wenigstens eine Aufnahmebehälter (20 ... 20'") in oder an einer Tragstruktur (11; 11') von Funktionskomponenten (14, 15) der Fahrzeugwaschanlage (10; 10') angeordnet oder darin und/oder daran ausgebildet ist und in dem Aufnahmebehälter wenigstens eine Klärstufe (21) zum Klären des anfallenden mineralölhaltigen Schmutzwassers (30) vorgesehen ist.

2. Fahrzeugwaschanlage nach Anspruch 1, **dadurch gekennzeichnet, dass** wenigstens eine, insbesondere der Klärstufe (21) nachgelagerte Inertreinigungsstufe (22) zum Reinigen des Schmutzwassers (30) von inerten Störstoffen vorgesehen ist.

3. Fahrzeugwaschanlage nach Anspruch 1 oder 2, **dadurch gekennzeichnet, dass** der wenigstens eine Aufnahmebehälter (20 ... 20'") in einer Stütze (12) und/oder einem Querträger (13) der Fahrzeugwaschanlage (10; 10') angeordnet oder darin ausgebildet ist.

4. Fahrzeugwaschanlage nach einem der vorhergehenden Ansprüche, **dadurch gekennzeichnet, dass** der wenigstens eine Aufnahmebehälter (20 ... 20'") in einer im wesentlichen hohlen Tragstruktur (11; 11')aufgenommen ist.

5. Fahrzeugwaschanlage nach einem der vorhergehenden Ansprüche, **dadurch gekennzeichnet, dass** der Aufnahmebehälter (20 ... 20'") aus einem Kunststoff- oder Faserverbundmaterial besteht.

6. Fahrzeugwaschanlage, mit einem Waschraum (17) für Fahrzeuge, in dem Funktionskomponenten (14, 15) der Fahrzeugwaschanlage (10") angeordnet sind, und mit wenigstens einem Aufnahmebehälter (20 ... 20'") zum Aufnehmen von Schmutzwasser und/oder Brauchwasser (30) von oder für mehrere Waschvorgänge, wobei der wenigstens eine Aufnahmebehälter (20 ... 20'") in dem Waschraum (17) angeordnet oder ausgebildet ist und in dem Aufnahmebehälter wenigstens eine Klärstufe (21) zum Klären des anfallenden mineralölhaltigen Schmutzwassers (30) vorgesehen ist.

7. Fahrzeugwaschanlage nach Anspruch 6, **dadurch gekennzeichnet, dass** der wenigstens eine Aufnahmebehälter (20 ... 20'") in einem Eckbereich (16) des Waschraumes (17) der Fahrzeugwaschanlage (10") angeordnet ist.

8. Fahrzeugwaschanlage nach Anspruch 6 oder 7, **dadurch gekennzeichnet, dass** der wenigstens eine Aufnahmebehälter (20 ... 20'") im Zufahrts- und/oder Ausfahrtsbereich (18) des Waschraumes (17) angeordnet ist.

9. Fahrzeugwaschanlage nach einem der vorhergehenden Ansprüche, **dadurch gekennzeichnet, dass** die wenigstens eine Klärstufe (21) ein- oder mehrstufig ausgebildet ist und/oder die wenigstens eine Klärstufe (21) einen Schlammfang, eine Belebungseinheit und/oder eine Nachkläreinheit umfasst und die vorgenannten Einheiten insbesondere in je einem Aufnahmebehälter (20 ... 20"') angeordnet sind.

10. Fahrzeugwaschanlage einem der vorhergehenden Ansprüche, **dadurch gekennzeichnet, dass** mindestens zwei Inertreinigungsstufen (22) wahlweise parallel oder seriell miteinander in Verbindung stehen.

11. Fahrzeugwaschanlage nach einem der vorhergehenden Ansprüche, **dadurch gekennzeichnet, dass** Verbindungs-, Schalt- und/oder Steuerinstallationen für die wenigstens eine Klärstufe (21) und/oder die wenigstens eine Inertreinigungsstufe (22) innerhalb der im wesentlichen hohlen Tragstruktur (11; 11') für Funktionskomponenten (14, 15) der Fahrzeugwaschanlage (10 ... 10'") angeordnet sind.

12. Fahrzeugwaschanlage nach einem der vorhergehenden Ansprüche, **dadurch gekennzeichnet, dass** die Funktionskomponenten (14, 15) der Fahrzeugwaschanlage (10 ... 10'") wenigstens eine Bürste (14), wenigstens eine Luftdüse und/oder wenigstens eine Wasserdüse (15) umfassen, wobei die wenigstens eine Wasserdüse (15) mit dem wenigstens einen Aufnahmebehälter (20 ... 20"') in Verbindung steht.

13. Fahrzeugwaschanlage nach einem der vorhergehenden Ansprüche, **dadurch gekennzeichnet, dass** das in der wenigstens einen Klärstufe (21) geklärte und/oder in der wenigstens einen Inertreinigungsstufe (22) gereinigte Schmutzwasser (30) einer Brauchwasservorlage (23) zuführbar ist.

14. Fahrzeugwaschanlage nach Anspruch 13, **dadurch gekennzeichnet, dass** die wenigstens eine Klärstufe (21) bzw. mindestens eine Einheit der Klärstufe (Schlammfang, Belebungseinheit und/oder Nachkläreinheit) und/oder die wenigstens eine Inertreinigungsstufe (22) als in einem im Boden, insbesondere bereits bauseits vorgesehenen Raum oder in einem im Boden eingelassenen Behälter angeordnet sind und die Brauchwasservorlage (23) als nachrüstbarer, in wenigstens einer Stütze (12) und/oder in einem Eckbereich (16) angeordneter Aufnahmebehälter (20, 20') ausgebildet ist.

15. Fahrzeugwaschanlage nach einem der vorhergehenden Ansprüche, **dadurch gekennzeichnet, dass** die Fahrzeugwaschanlage als Portalwaschanlage oder als Durchlaufwaschanlage bzw. Waschstraße ausgestaltet ist.
